# EUROPÄISCHE PATENTANMELDUNG

(11) **EP 0 691 311 A1**
(43) Veröffentlichungstag der Anmeldung: **10.01.1996**
(21) Anmeldenummer: 95890096.1
(22) Anmeldetag: 19.05.1995
(51) Int. Cl.: C03B 33/07

(54) **Anordnung zum Teilen von Verbundglas**

(30) Priorität: 04.07.1994 AT 1321/94; 12.12.1994 DE 4444184
(71) Anmelder: Lisec, Peter, A-3363 Amstetten-Hausmening (AT)
(72) Erfinder: Die Erfindernennung liegt noch nicht vor
(74) Vertreter: Beer, Manfred, Dipl.-Ing.

(57) **Zusammenfassung**

Eine Anordnung zum Teilen von Verbundglas besteht aus einer Vorrichtung zum Teilen von Verbundglas, und einem Glasschneidetisch 30 mit einer entlang seiner Auflage verfahrbaren Schneidbrücke 33, auf der ein Schneidkopf 38 zum Ritzen von Glastafeln verfahrbar ist. Die Vorrichtung zum Teilen von Verbundglas ist an einem der parallel zur Schneidbrücke 30 verlaufenden Ränder des Glasschneidetisches 30 angeordnet. An der Schneidbrücke 33 des Glasschneidetisches 30 ist ein Anschlag 40 zum Ausrichten von Verbundglas in der Vorrichtung zum Teilen von Verbundglas gegenüber den Ritzwerkzeugen dieser Vorrichtung vorgesehen. So wird Stellfläche eingespart und die Schneidbrücke 33 mit dem an ihr vorgesehenen Anschlag 40 kann zum Ausrichten von Verbundglas gegenüber der Einrichtung zum Ritzen der Glasscheiben von Verbundglas dienen. Auch kann die Vorrichtung zum Teilen von Verbundglas schmäler ausgeführt sein, bzw. überhaupt nur eine verschwenkbare Auflage 5 aufweisen, wenn die gestellfeste Auflage 2 mit der Auflagenfläche des Glasschneidetisches 30 einstückig ausgeführt ist.

## Beschreibung

Die Erfindung betrifft eine Anordnung zum Teilen von Verbundglas, bestehend aus einer Vorrichtung zum Teilen von Verbundglas, und einem Glasschneidetisch mit einer entlang einer Auflage verfahrbaren Schneidbrücke, auf der ein Schneidkopf zum Ritzen von Glasscheiben verfahrbar ist.

Vorrichtungen zum Teilen von Verbundglas sind bekannt, in welchem Zusammenhang beispielsweise auf die DE 32 30 554 A1 verwiesen werden kann.

Eine Vorrichtung zum Zerteilen von Verbundglas in Zuschnitte ist aus der EP 596 852 A1 bekannt. Bei dieser bekannten Vorrichtung wird die Folie im Gegensatz zu früheren Vorschlägen, bei welchen die Folie zwischen den Glasscheiben des Verbundglases durch Wärmezufuhr abgeschmolzen wurde, mit Hilfe eines energiereichen Strahls, der entlang der geöffneten Bruchlinie in dem Verbundglas bewegt wird, durchgetrennt.

Die bekannten Vorrichtungen zum Teilen von Verbundglas besitzen zwei Auflagen, und im Bereich zwischen den beiden Auflagen Einrichtungen zum Ritzen der Glastafeln des Verbundglases sowie Einrichtungen zum Durchtrennen der zwischen den Glastafeln des Verbundglases vorgesehenen Kunstoffolie. Das eigentliche Teilen des Verbundglases entlang der in den beiden Glastafeln erzeugten Ritzlinien erfolgt durch Knicken des Verbundglases zunächst nach der einen und dann nach der anderen Seite. Das Teilen kann aber auch durch Ausüben von Druck auf das Verbundglas mit Hilfe von Druckrollen erfolgen, die entlang der Ritzlinie bewegt werden, so daß die in der jeweils gegenüberliegenden Glastafel vorgesehene Ritzlinie zu einer Bruchlinie geöffnet wird.

Weiters sind Glasschneidetische bekannt, auf welchen Glastafeln mit Hilfe eines Schneidwerkzeuges (Schneidrädchen), das auf einem entlang einer Schneidbrücke verschiebbaren Schneidkopf montiert ist, geritzt werden. Die Glastafeln werden später entlang der Ritzlinien geteilt (gebrochen).

Der Erfindung liegt die Aufgabe zugrunde, einen Glasschneidetisch und eine Vorrichtung zum Teilen von Verbundglas miteinander zu kombinieren, um Raum (Stellfläche) zu sparen und den Aufwand insgesamt zu verringern.

Erfindungsgemäß wird diese Aufgabe dadurch gelöst, daß die Vorrichtung zum Teilen von Verbundglas an einer der parallel zur Schneidbrücke verlaufenden Seiten des Glasschneidetisches angeordnet ist, und daß an der Schneidbrücke des Glasschneidetisches ein Anschlag für das zu teilende Verbundglas vorgesehen ist.

Dadurch, daß die Vorrichtung zum Teilen von Verbundglas neben dem Glasschneidetisch angeordnet ist, ergibt sich die Möglichkeit die Schneidbrücke des Glasschneidetisches als Träger für einen Anschlag zum Ausrichten von Verbundglas gegenüber der an der Vorrichtung zum Teilen von Verbundglas vorgesehenen Einrichtung zum Ritzen der beiden Glastafeln des Verbundglases auszunützen.

Überdies kann die Auflagefläche (der Tisch) des Glasschneidetisches als eine der beiden Auflagen der Vorrichtung zum Teilen von Verbundglas herangezogen werden. Dadurch wird nicht nur der apparative Aufwand vereinfacht, sondern auch Stellfläche eingespart.

Der Anschlag, der an der Schneidbrücke vorgesehen ist, kann eine durchgehende Anschlagleiste sein oder aber aus mehreren Anschlagteilen bestehen.

In einer Ausführungsform der Erfindung ist vorgesehen, daß der Anschlag aus einer der Auflagefläche des Glasschneidetisches angenäherten Wirkstellung in eine von dieser entfernte Stellung und wieder zurück verstellbar ist. Dadurch kann der Anschlag von der Fläche des Glasschneidetisches abgehoben werden, wenn er nicht benötigt wird, so daß der Transport von Glastafeln oder von Verbundglas oder von Teilen derelben nicht behindert wird.

Die konkrete Ausführung der in der erfindungsgemäßen Anordnung verwendeten Vorrichtung zum Teilen von Verbundglas ist weitgehend beliebig.

Um den Transport von Verbundglas oder von Glastafeln zu vereinfachen, kann vorgesehen sein, daß die vom Glasschneidetisch abgekehrte Auflage der Vorrichtung zum Teilen von Verbundglas als Luftkissen- und/oder als Band- oder Rollenförderer für den Transport von Glasscheiben und/oder Verbundglas ausgebildet ist.

Weitere Einzelheiten und Vorteile der Erfindung ergeben sich aus der nachstehenden Beschreibung, in welcher auf die angeschlossenen Zeichnungen, in der Ausführungsbeispiele der Erfindung dargestellt sind, Bezug genommen wird.
Fig. 1 eine erste Ausführungsform einer Vorrichtung zum Teilen von Verbundglas in Seitenansicht,
Fig. 2 eine andere Ausführungsform,
Fig. 3 eine Anordnung aus einer Vorrichtung zum Teilen von Verbundglas und einem Glasschneidetisch,
Fig. 4 eine Einzelheit einer anderen Ausführungsform einer Vorrichtung zum Teilen von Verbundglas,
Fig. 5 und 6 Einzelteile der Klemmvorrichtung zum Festlegen von Verbundglas an den Auflagen der Ausführungsform von Fig. 4,
Fig. 7 in Schrägansicht eine Schneideinrichtung mit einer Klinge,
Fig. 8 die Schneideinrichtung in einer anderen Ansicht,
Fig. 9.1. bis 9.4.1. einzelne Phasen beim Teilen von Verbundglas,
Fig. 10 das Maschinengestell der Ausführungsform von Fig. 4 ohne die Auflageplatten und die Klemmeinrichtungen,
Fig. 11 das Maschinengestell aus Fig. 10 in anderer Ansicht und die
Fig. 12, 13 und 14 Einzelheiten der Lagerung der verschwenkbaren Auflage in verschiedenen Ansichten.

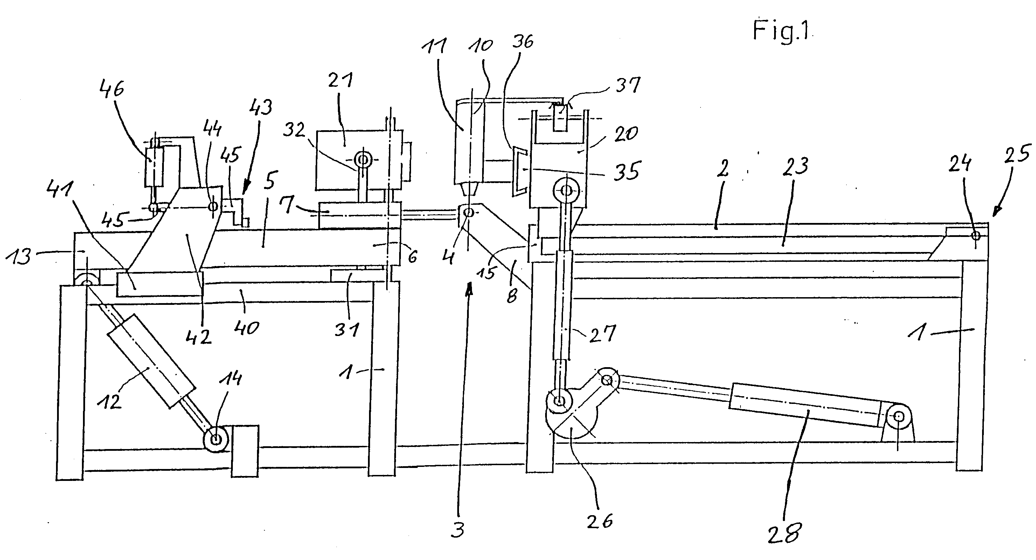

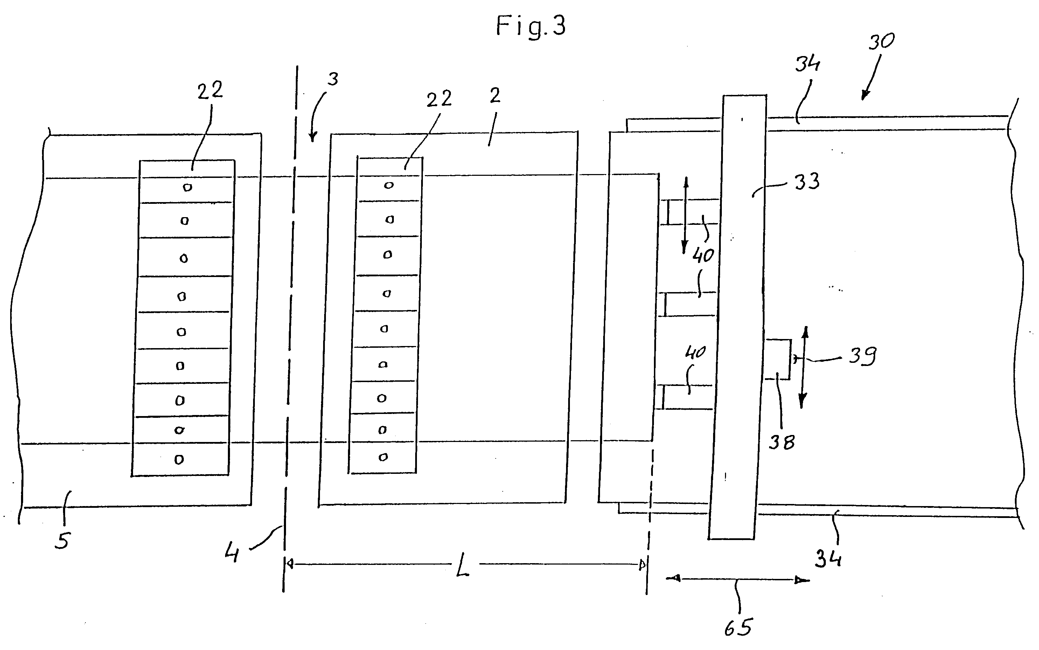

Die in Fig. 1 gezeigte Ausführungsform einer Vorrichtung zum Teilen von Verbundglas, wie sie gemäß der Erfindung mit einem Glasschneidetisch kombiniert werden kann, besitzt ein Maschinengestell 1, in dem in Fig. 1 rechts eine gestellfeste Auflage 2 für das zu teilende Verbundglas montiert ist. Die gestellfeste Auflage 2 ist beispielsweise mit einem Filzbelag versehen und weist Öffnungen auf, die wahlweise mit Überdruck oder Unterdruck beaufschlagt werden können, so daß das Zuführen von zu teilendem Verbundglas erleichtert wird (Luftkissen) bzw. das Festhalten derselben möglich ist, wenn die Öffnungen in der Auflage 2 mit Unterdruck beaufschlagt werden. Die gestellfeste Auflage 2 kann (sowie bei allen noch zu beschreibenden Ausführungsformen der Vorrichtung zum Teilen von Verbundglas) mit der Auflagefläche ("Tisch") eines Glasschneidetisches einstückig ausgebildet sein und so einen größeren oder kleineren Teil oder zur Gänze diese Auflagefläche bilden. Die Auflage 2 kann aber auch unmittelbar oder mit Abstand (siehe Fig. 3) neben dem Glasschneidetisch angeordnet sein.

Mit Abstand (Spalt 3) neben der gestellfesten Auflage 2 ist im Maschinengestell 1 eine um eine Achse 4 verschwenkbare Auflage 5 (links in Fig. 1) vorgesehen. Im Bereich des dem Spalt 3 zwischen den beiden Auflagen 2 und 5 zugekehrten Randes 6 der verschwenkbaren Auflage 5 sind zwei Druckmittelmotore 7 montiert, deren Kolbenstangen verschwenkbar an Auslegern 8 gelagert sind. Die Ausleger 8 sind an den beiden Seiten des Maschinengestells 1 im Bereich der gestellfesten Auflage 2 montiert. Die Achse 4, um welche die Auflage 5 verschwenkbar ist, befindet sich in der Symmetrieebene 10 des Spaltes 3 zwischen den Auflagen 2 und 5, in der auch die Schneidwerkzeuge (eines von oben und eines von unten her) sowie die Schneideinrichtung 11 zum Trennen der zwischen den Glasscheiben des Verbundglases vorgesehenen Folie wirksam werden.

Zum Verschwenken der in Fig. 1 linken Auflage 5 ist ein Druckmittelmotor 12 vorgesehen, der an dem dem Spalt 3 zwischen den beiden Auflagen 2 und 5 gegenüberliegenden Rand 13 des Rahmens der Auflage 5 etwa in dessen Mitte angelenkt ist und sich mit seinem anderen Ende in einem maschinengestellfesten Lager 14 abstützt.

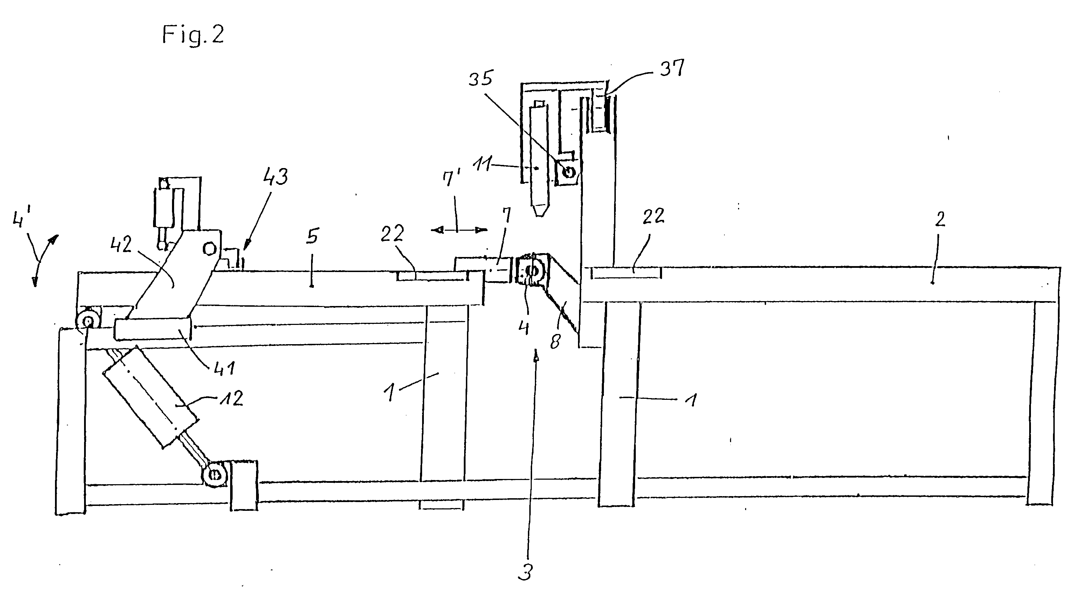

Den beiden einander zugekehrten Rändern 15 und 6 der beiden Auflagen 2 und 5 sind Klemmbalken 20 und 21 zugeordnet, die auf die Auflagen 2 und 5 zu absenkbar sind, um zu teilendes Verbundglas an den Auflagen 2 und 5 festzulegen. Zusätzlich oder alternativ können in den Auflagen 2 und 5 im Bereich ihrer einander zugekehrten Ränder 6, 15 mit Unterdruck beaufschlagbare Sauger (ähnlich der Sauger 22 von Fig. 2 oder Fig. 3) vorgesehen sein, um das Festhalten des zu teilenden Verbundglases zu unterstützen. Insbesondere können die Sauger auch dazu dienen, Verbundglas, das für einen Schnitt gegenüber den Schneidwerkzeugen entsprechend ausgerichtet worden ist, festzulegen, bis die Klemmbalken 20, 21 abgesenkt worden sind.

Der der gestellfesten Auflage 2 zugeordnete Klemmbalken 20 wird von zwei Lenkern 23 getragen, die über Kugelzapfen 24 im Bereich der vom Spalt 3 zwischen den beiden Auflagen 2, 5 abgekehrten Rand 25 der gestellfesten Auflage 2 im Maschinengestell 1 verschwenkbar abgestützt sind. Zum Heben und Senken des Klemmbalkens 20 gegenüber der gestellfesten Auflage 2 ist ein Kurbel-Schubstangentrieb (Kurbel 26, Schubstange 27, Zylinder 28) vorgesehen.

Der Klemmbalken 21 an der beweglichen Auflage 5 wird im Beispiel von Fig. 1 von zwei Führungsstangen 30 geführt, die im Bereich der Enden des Klemmbalkens 21 vorgesehen sind und dort vorgesehene Führungsbuchsen durchsetzen. Zum Heben und Senken des Klemmbalkens 21 sind an seinen beiden Enden angreifende Spindelantriebe 31 vorgesehen, deren Spindeln 32 mit dem Klemmbalken 21 verbunden sind. Die Führungsstangen 30 und die Spindelmuttern der Spindelantriebe 31 sind am Rahmen der Auflage 5 montiert. Um ein gleichmäßiges Heben des der beweglichen Auflage 5 zugeordneten Klemmbalkens 21 zu bewirken, sind die beiden Spindelantriebe 31 mit einem gemeinsamen Antriebsmotor über Wellen gekuppelt.

An dem der gestellfesten Auflage 2 zugeordneten Klemmbalken 20 ist eine Führungsschiene 35 vorgesehen, an der über einen Schlitten 36 ein Schneidwerkzeug und die Schneideinrichtung 11 verschiebbar geführt sind. Zum Verschieben des Schneidwerkzeuges und der Schneideinrichtung 11 entlang des Spaltes 3 zwischen den beiden Auflagen 2 und 5 in der Symmetrieebene 10 ist ein Endlosriemenantrieb 37 vorgesehen, mit dem der Schlitten 36 gekuppelt ist.

Ein Schneidwerkzeug, das von unten her auf das Verbundglas einwirkt, um dessen untere Scheibe zu ritzen, ist auf einer (nicht gezeigten) Führungsschiene geführt, die an dem dem Spalt 3 zwischen den beiden Auflagen 2 und 5 zugekehrten Rand 15 der gestellfesten Auflage 2 befestigt ist.

Auf im Maschinengestell 1 montierten Führungsschienen 40 sind beidseits der beweglichen Auflage 5 Schlitten 41 geführt, die an nach oben ragenden Armen 42, die miteinander verbunden sind, eine Anschlagleiste 43 tragen. Die Anschlagleiste 43 ist an den Armen 42 um eine zur Auflage 5 parallele Achse 44 verschwenkbar gelagert, so daß sie angehoben oder abgesenkt werden kann. Hiezu ist die Anschlagleiste 43 an Hebeln 45 befestigt, die um die Achse 44 verschwenkbar sind, und an der ein Druckmittelzylinder 46 angreift. Das Anheben und Absenken der Anschlagleiste 43 dient dazu, die Bewegungen der verschwenkbaren Auflage 5 nicht zu behindern. Die Anschlagleiste 43 kann entfallen, da der noch zu beschreibende Anschlag des Glasschneidetisches zum Ausrichten von zu teilendem Verbundglas vorgesehen ist.

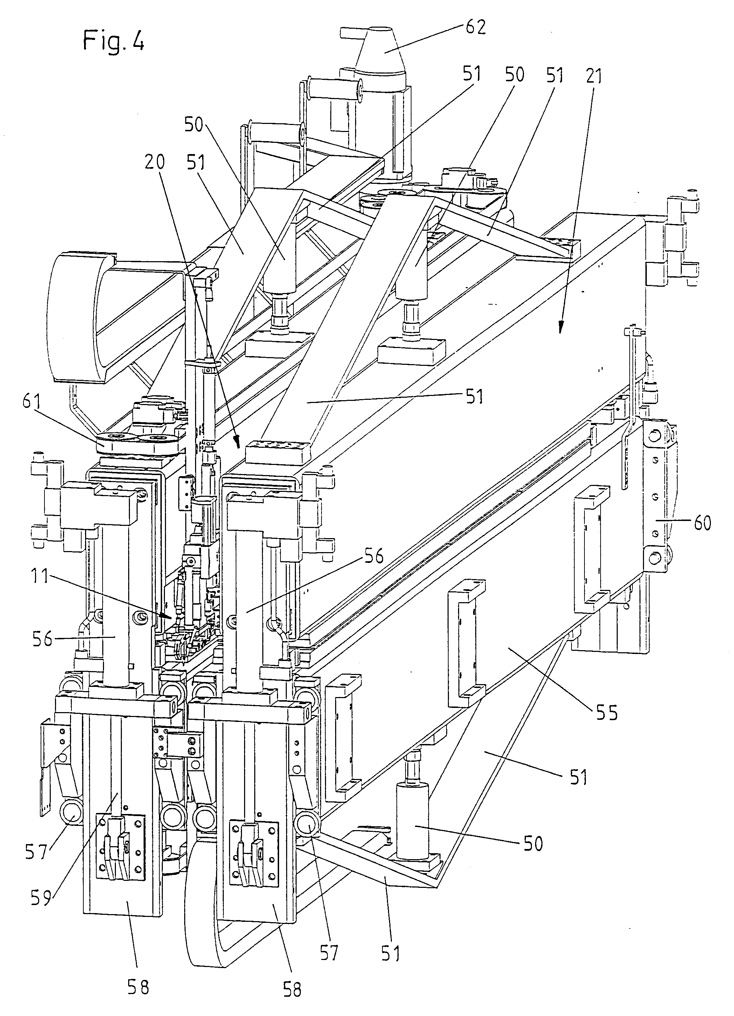

Um das Durchbiegen der Klemmbalken 20, 21, wenn diese Verbundglas gegen die Auflagen 2 und 5 pressen, zu verhindern, können in der Mitte beider Klemmbalken 20, 21 nach oben weisende Steher 50 (Fig. 4) vorgesehen sein, von welchen Zugstangen 51 zu den beiden Enden der Klemmbalken 20, 21 geführt und dort befestigt sind. Durch Vorspannen der Zugstangen 51, indem die als Druckmittelzylinder ausgebildeten Steher 50 betätigt werden, werden auch die Klemmbalken 20, 21 vorgespannt, so daß Verbundglas gleichmäßig über die gesamte Länge gegen die Auflagen 2 und 5 gedrückt wird. Eine ähnlich aufgebaute Versteifung mit nach unten weisenden Stehern 50 kann an den dem Spalt 3 benachbarten Rändern 15, 6 der Auflagen 2 und 5 bzw. den dort befindlichen Teilen des Maschinengestells 1 bzw. des Rahmens der Auflagen 2, 5 vorgesehen sein (Fig. 4).

Die in Fig. 2 gezeigte Vorrichtung besitzt zwei Auflagen 2 und 5, die zum Erleichtern des Antransportes auch als Luftkissentische ausgebildet und/oder mit Fördermitteln (Transportbänder) ausgerüstet sein können. Die Auflagen 2 und 5 sind im Maschinengestell 1 montiert, wobei die Auflage 2, die wie oben für die Ausführungsform von Fig. 1 beschrieben eine Auflagefläche des Glasschneidetisches oder ein Teil derselben sein kann, im Maschinengestell 1 starr montiert ist, wogegen die Auflage 5 um eine Achse 4 verschwenkbar (Pfeil 4') ist. Da die Auflage 5 über wenigstens zwei Druckmittelmotore 7 an maschinengestellfesten Lagern 4 befestigt ist, kann sie zusätzlich im Sinne des Doppelpfeiles 7' von der Auflage 2 wegbewegt und an diese wieder angenähert werden. Zum Ausführen der Schwenkbewegung der Auflage 5 ist wenigstens ein Druckmittelmotor 12 vorgesehen, der vorzugsweise ein doppelt wirkender Druckmittelmotor ist, dessen Null-Stellung der Lage der Auflage 5 entspricht, in der diese parallel zur Auflage 2 ausgerichtet ist.

Im Bereich des Spaltes 3 zwischen den Auflagen 2 und 5 ist ein Schneidwerkzeug und eine Schneideinrichtung 11 zum Durchtrennen der zwischen den Glasscheiben von Verbundglas vorgesehenen Kunststoffolie vorgesehen.

Im Maschinengestell 1 ist im Bereich der Auflage 5 noch der verschiebbare Anschlag 43 zum Festlegen der Schnittlage vorgesehen.

Um das zu teilende Verbundglas an den Auflagen 2 und 5 festlegen zu können, sind in den Auflagen 2 und 5 der Ausführungsform gemäß Fig. 2 je wenigstens eine Reihe aus Saugern 22, die über nicht gezeigte Leitungen mit einer Unterdruckquelle verbunden sind, vorgesehen. Diese Saugerreihen sind in der Nähe der dem Spalt 3 benachbarten Ränder 6, 15 der Auflagen 5 und 2 vorgesehen.

Wie insbesondere aus Fig. 3 ersichtlich, sind die Sauger 22 unmittelbar nebeneinander angeordnet. Die Sauger 22 können unabhängig voneinander mit Unterdruck beaufschlagt werden, so daß nur die Sauger 22 mit Unterdruck beaufschlagt werden, die von Verbundglas zur Gänze abgedeckt sind. Die außerhalb von Verbundglas liegenden Sauger 22 oder nur teilweise abgedeckte Sauger 22 werden nicht mit Unterdruck beaufschlagt. Hiezu kann eine automatische Steuerung vorgesehen sein, welche die Breite des Verbundglases erfaßt und die abgedeckten Sauger 22 aktiviert. Den Saugern 22 können aber auch Ventile zugeordnet sein, die schließen, wenn sich im Sauger 22 kein Unterdruck aufbaut. Die in Fig. 2 gezeigte Ausführungsform ist vornehmlich für dünnes Verbundglas bestimmt. Es versteht sich, daß auch Kombinationen der in den Fig. 1 bis 6 gezeigten Einrichtungen, mit welchen Verbundglas beim Ritzen, Brechen und Durchschneiden der Folie an den Auflagen 2 und 5 festgelegt und festgehalten wird, möglich sind.

Die in Fig. 3 in Draufsicht gezeigte, erfindungsgemäße Anordnung besteht aus einem Glasschneidetisch 30, entlang welchem eine Schneidbrücke 33 auf Führungsschienen 34 verfahrbar ist. Auf der Schneidbrücke 33 ist in ihrer Längsrichtung ein Schneidkopf 38 verfahrbar, der ein Ritzwerkzeug (Schneidrädchen) zum Ritzen von Glastafeln oder von Verbundglas trägt.

Neben einem parallel zur Schneidbrücke 33 ausgerichteten Rand des Schneidtisches 30 ist eine Vorrichtung zum Teilen von Verbundglas angeordnet. Diese Vorrichtung umfaßt die Auflage 2, 5 und im Bereich des Spaltes 3 in Fig. 3 nicht näher gezeigte Einrichtungen zum Ritzen der beiden Glastafeln von Verbundglas und eine Einrichtung zum Durchtrennen der Kunststoffolie, die zwischen den beiden Glastafeln des Verbundglases 15 angeordnet ist. Diese Einrichtung zum Durchtrennen kann eine Klinge (Messer) sein, oder eine Einrichtung zum Abschmelzen der Verbundfolie, die beispielsweise als Lasereinrichtung, als Plasmabrenner (EP 596 822 A1), als Heizstab oder als Heißluftdüse (DE 32 30 554 A1) ausgebildet sein kann.

Zum Teilen von Verbundglas, wenn dieses an der vorgegebenen Stelle beidseitig geritzt worden ist, wird das Verbundglas geknickt, wozu beispielsweise die Auflage 5 gegenüber der Auflage 2, die mit der Auflagefläche des Glasschneidetisches 30 fluchtet oder mit dieser einteilig ausgebildet ist, verschwenkbar montiert ist. Möglichkeiten zum Teilen von Verbundglas und hiefür geeignete Vorrichtungen, die bei der erfindungsgemäßen Anordnung verwendet werden können, sind in den Fig. 1, 2 und 4 bis 14 gezeigt.

Um in der in Fig. 3 gezeigten Ausführungsform einer erfindungsgemäßen Anordnung Verbundglas entlang der in Fig. 3 strichliert eingezeichneten Null-Linie auszurichten, ist an der Schneidbrücke 33 ein Anschlag vorgesehen, der im gezeigten Ausführungsbeispiel aus drei Anschlagteilen 40 besteht. Die Anschläge 40 werden gegenüber der Null-Linie durch Verstellen der Schneidbrücke 33 (Pfeil 65 in Fig. 3) so ausgerichtet, daß sie von der Null-Linie den der Größe des herzustellenden Abschnittes von Verbundglas entsprechenden Abstand "L" haben. Nun wird das Verbundglas herangefördert, bis seine vordere Kante an den Anschlagteilen 40 anliegt, worauf das Teilen von Verbundglas ausgeführt werden kann. Zum Abtransport des abgeteilten Teiles von Verbundglas und zum Antransport von (normalem) Flachglas, das auf dem Schneidtisch 30 geritzt werden soll, werden die Anschlagteile 40 von der Auflagefläche (Tisch) abgehoben.

Die Ausführung der Vorrichtung zum Teilen von Verbundglas 15 und deren Arbeitsweise sind für die vorliegende Erfindung nicht in erster Linie wesentlich. Die an Hand der Fig. 1, 2 und 4 bis 14 gezeigten Ausführungsformen solcher Vorrichtungen und deren an Hand der Figuren beschriebene Konstruktion und Arbeitsweise sind daher lediglich als bevorzugte Beispiele zu verstehen.

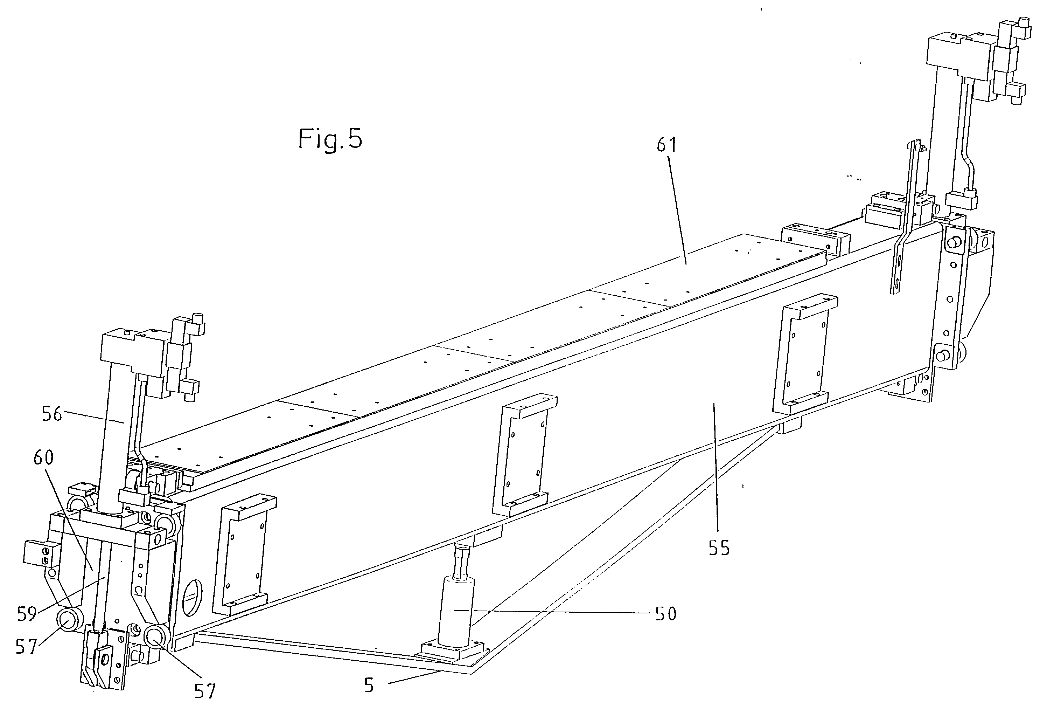

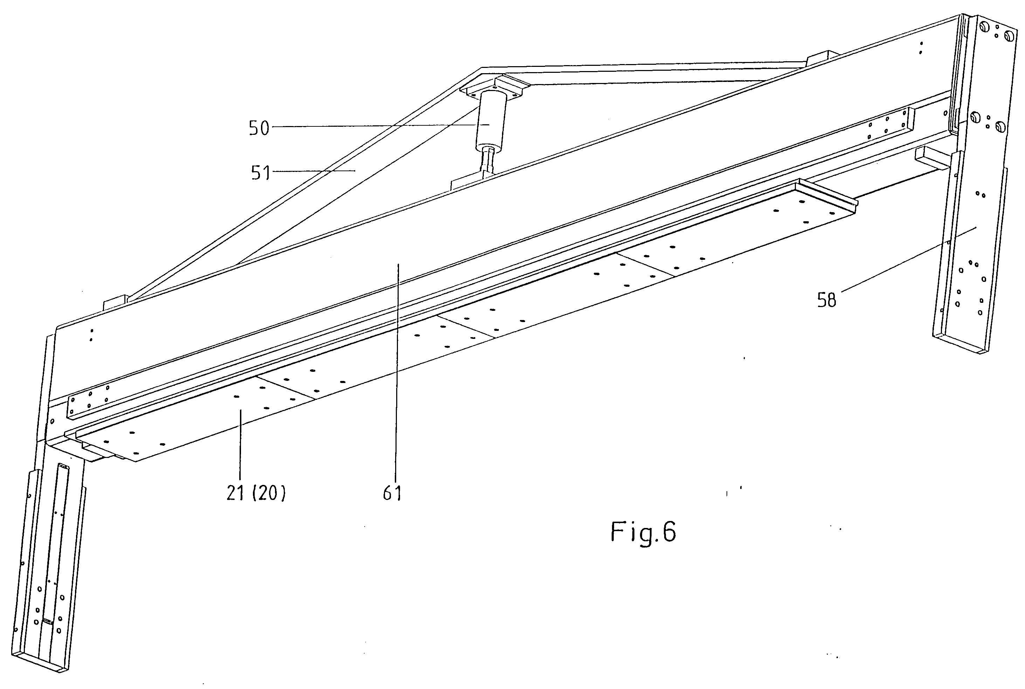

Bei der in den Fig. 4 bis 14 gezeigten Ausführungsform einer Vorrichtung zum Teilen von Verbundglas sind im Bereich der dem Spalt 3 benachbarten Ränder der beiden Auflagen 2, 5 Klemmeinrichtungen 20, 21 der in Fig. 4 gezeigten Ausführungsform vorgesehen. Dabei sind die unterhalb der Auflagen 2, 5 angeordneten Teile der Klemmeinrichtungen (Versteifungsbalken 55) mit den die Auflagen 2 und 5 tragenden Vorrichtungsteilen fest verbunden. Die oberhalb der Auflagen 2 und 5 angeordneten Versteifungsbalken 55 sind mit Hilfe von Druckmittelzylindern 56 auf und ab verstellbar, d.h. senkrecht zu den Auflagen 2 und 5 heb- und senkbar. Einzelheiten eines der Klemmbalken 20, 21 sind in Fig. 6 gezeigt, wogegen Einzelheiten eines der Versteifungsbalken 55 in Fig. 5 gezeigt sind. Fig. 5 zeigt auch die Anordnung der Druckmittelzylinder 56, welche die Klemmbalken 20, 21 senkrecht zu den Auflagen 2, 5 bewegen.

In Fig. 5 ist gezeigt, daß an den Enden der Versteifungsbalken 55 auf einer Platte montiert Führungsrollen 57 vorgesehen sind, die an seitlichen, plattenförmigen Führungsansätzen 58 der Klemmbalken 20, 21 von außen her anliegen und diese senkrecht zur Ebene der Auflagen 2 und 5 führen. Um die Klemmbalken 20, 21 mit den sie antreibenden Zylindern 56 zu kuppeln, sind die Kolbenstangen 59 der Betätigungszylinder 56 mit den Führungsansätzen 58 der Klemmbalken 20, 21 gekuppelt, wogegen die Zylinder 56 an der die Führungsrollen 57 tragenden Grundplatte 60 befestigt sind. Die Gesamtanordnung der Antriebe für die Klemmbalken 20, 21 ist auch in Fig. 4 gezeigt.

Auf den einander zugekehrten Flächen der Klemmbalken 20, 21 und der Versteifungsbalken 55 sind Auflagen 61 befestigt.

In Fig. 4 ist auch gezeigt, daß bei der in den Fig. 4 bis 14 gezeigten Ausführungsform die beiden Schneidwerkzeuge und die Einrichtung 11 zum Durchtrennen der Kunststoffolie zwischen den Glasscheiben von Verbundglas auf dem der gestellfesten Auflage 2 zugeordneten Klemmbalken 20 bzw. dem dieser Auflage zugeordneten Versteifungsbalken 55 angeordnet, d.h. auf an diesen Bauteilen mittelbar oder unmittelbar befestigten Führungsschienen verschiebbar sind. Auch die Antriebe, z.B. der in Fig. 4 für die kombinierte Ritz- und Durchtrenneinrichtung (Schneidwerkzeug und Schneideinrichtung 11) zugeordnete Endlosriemen-Antrieb 61, ist auf dem Klemmbalken 20 ebenso aufgebaut wie der zugeordnete Antriebsmotor 62.

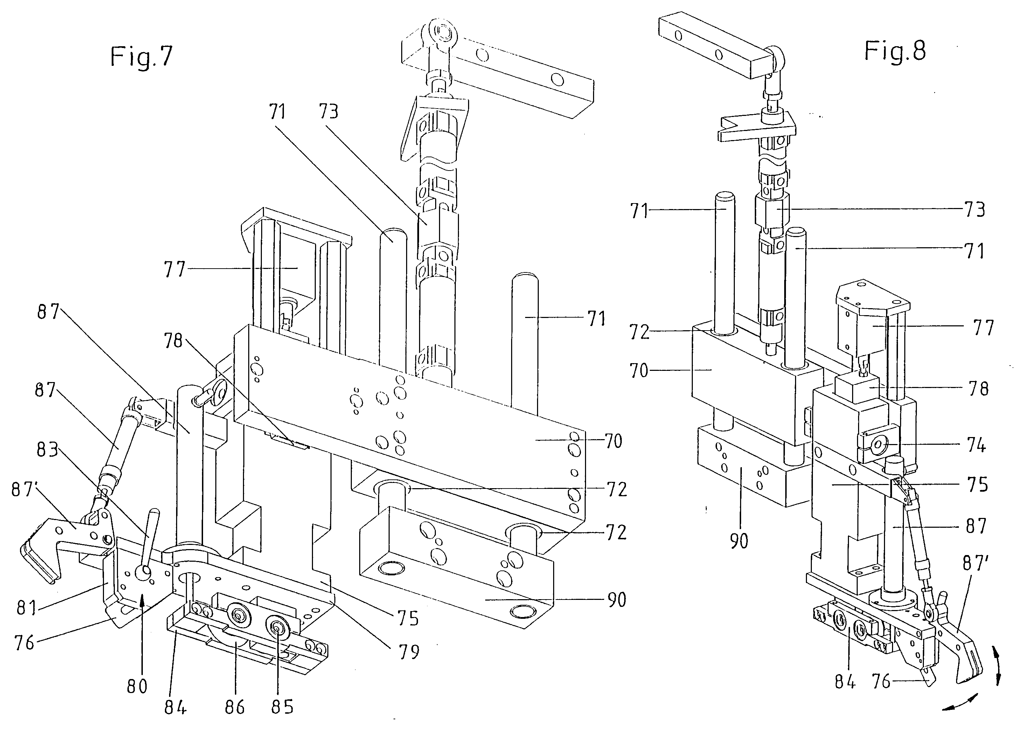

Die Einrichtung 11 zum Durchtrennen der Kunststoffolie zwischen den Glasscheiben von Verbundglas ist (siehe Fig. 7 und 8) auf einer Platte 70 montiert, die auf zwei Führungsstangen 71 über Gleitbuchsen 72 geführt ist und entlang dieser Führungsstangen 71 durch einen Druckmittelzylinder 73 senkrecht zur Ebene der beiden Auflagen 2, 5 verstellbar ist. An der Platte 70 ist um eine zu dieser parallele und horizontale Achse 74 verschwenkbar ein Halter 75 für eine Klinge 76 montiert. Die Verschwenkbarkeit des Halters 75 um die Achse 74 kann mit Hilfe eines durch einen Druckmittelzylinder 77 betätigten Arretierkeils 78 gesperrt und durch Anheben des Arretierkeils 78 wieder freigegeben werden.

Am unteren Ende des Halters 75 ist eine Grundplatte 79 montiert, die an einem Ende eine Klemmeinrichtung 80 zum Festlegen der Klinge 76 trägt. Die Klemmeinrichtung 80 besteht aus einer mit der Grundplatte 79 fest verbundenen Klingenaufnahme 81 und einer Klemmplatte 82, die mit Hilfe eines Klemmhebels 83 zum Festlegen der Klinge 76 gegen die Klingenaufnahme 81 spannbar ist.

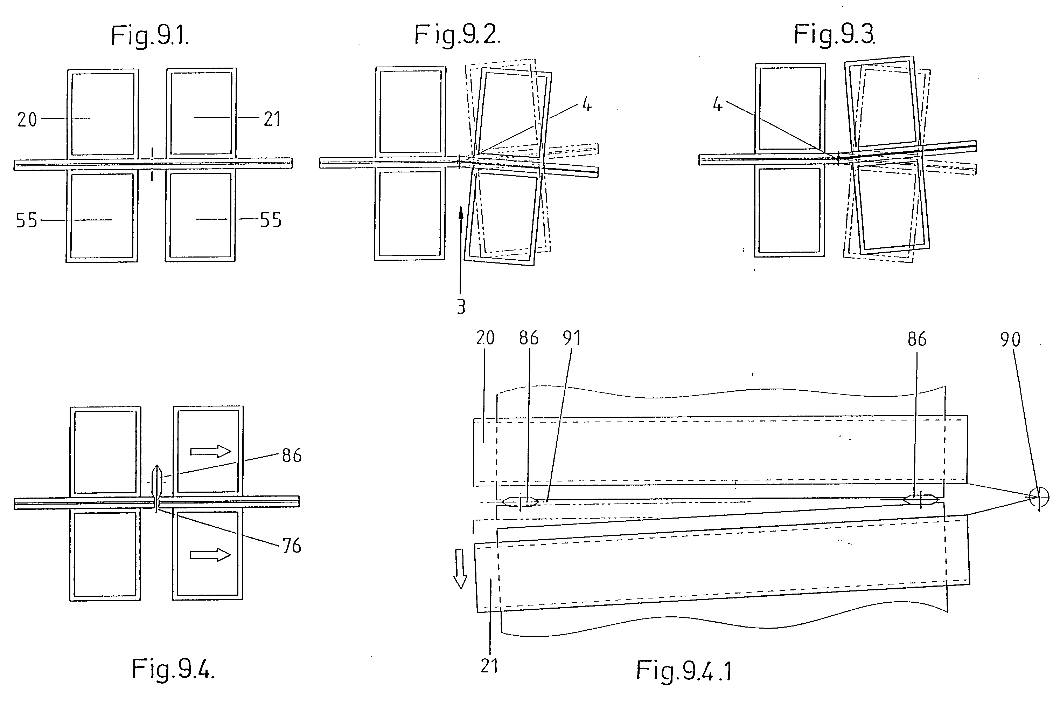

An der Grundplatte 79 ist weiters um eine Achse 85, die senkrecht zur Bewegungsrichtung der Schneidwerkzeuge im Bereich zwischen den beiden Auflagen 2 und 5 und horizontal ausgerichtet ist, ein Träger 84 für ein Meß- und Nachführrad 86 gelagert. Das freie Ende dieses Trägers 84 ist mit einem Schalter 87 gekuppelt. Das Meß- und Nachführrad 86 läuft in einem durch Auseinanderziehen der beiden Teile der Verbundglasscheibe nach dem Brechen der beiden Glasscheiben (siehe Fig. 9) gebildeten, keilförmigen Spalt und bewegt sich beim Auflaufen auf ein allenfalls vorhandenes Hindernis im Spalt aus diesem nach oben heraus, so daß der Schalter 87 betätigt wird und bewirkt, daß die Klinge 76 aus dem Spalt herausgehoben wird.

Wenn die Klinge 76 entlang des Spaltes zwischen den Verbundglasteilen bewegt wird, ist die Arretierung für die Verschwenkbarkeit des Halters 75 um die Achse 74 freigegeben (der Arretierkeil 78 ist angehoben), so daß die Klinge 76 vom an den Rändern des Spaltes entlanglaufenden Meß- und Nachführrad 86 geführt immer in der Mitte des Spaltes läuft.

Statt des Schalters 87 kann auch ein das Verschwenken des Trägers 84 für das Führungsrad 86 erfassendes Element, z.B. ein elektronisches Meßlineal vorgesehen sein. Durch die von diesem abgegebenen Signale kann das (noch zu erläuternde) Verdrehen der Auflage 5 zum Öffnen des Bruches zu einem keilförmigen Spalt, so gesteuert werden, daß das Führungsrad 86 und damit die Klinge 76 hinreichend weit in den keilförmigen Spalt eintauchen, um die Folie sicher durchzuschneiden.

An der Grundplatte 79 ist weiters verschwenkbar eine Sicherheitsklappe 87 für die Klinge 76 vorgesehen, die mit Hilfe eines Druckmittelzylinders 88 in eine die Klinge 76 überdekkende und in die in Fig. 7 gezeigte, die Klinge 76 freigebende Lage verschwenkt werden kann.

An dem an den Führungsstangen 71 unten angeordneten Klotz 90 ist ein an sich bekanntes (nicht gezeigtes) Schneidwerkzeug (Schneidrädchen) für das Ritzen der oberen Glasscheibe des Verbundglases vorgesehen. Ein ähnliches Schneidwerkzeug ist auf einem unterhalb der Auflageebene für das Verbundglas auf einer Führung verfahrbaren Schlitten montiert, wobei beide Glasscheiben des Verbundglases von den Schneidwerkzeugen, d.h. von oben und von unten her bevorzugt gleichzeitig geritzt werden.

Der Ablauf der Funktionen Glasschneiden, Brechen und Folie trennen ist in Fig. 9 gezeigt und wird an Hand dieser erläutert. Aus Fig. 9 ist ersichtlich, daß bei zwischen den Klemmbalken 20, 21 und den Widerlagern 55 festgeklemmtem Verbundglas oben und unten gleichzeitig geschnitten wird (Fig. 9.1). Hierauf wird zunächst die obere (oder die untere) und dann die untere (oder die obere) Glasscheibe durch Verschwenken der beweglichen Auflage 5 gebrochen, so daß ein durchgehender Bruch entlang der vorher erzeugten Ritzlinien entsteht (Fig. 9.2 und 9.3). Hierauf wird die relativ zur maschinengestellfesten Auflage 2 bewegliche Auflage 5 zusammen mit dem Klemmbalken 21 und dem diesem (unten) gegenüberliegenden Widerlager (Versteifungsbalken) 55 um einen außerhalb der Auflagen 2, 5 liegenden Drehpunkt 90, ohne sie zu kippen, verschwenkt, so daß das vom Drehpunkt 90 entfernt liegende Ende des Bruches geöffnet und dort die Folie gespannt wird (siehe Fig. 9.4.1). Von der Meß- und Nachführrolle 86 geführt wird nun die Klinge 76 in den Spalt 91 zwischen den Verbundglasteilen abgesenkt und schneidet die Folie bei fortschreitender Bewegung entlang des Spaltes 91 durch. Dabei wird die bewegliche Auflage zunehmend verschwenkt, wie aus Fig. 9.4.1 durch die gezeigten Drehstellungen veranschaulicht ist.

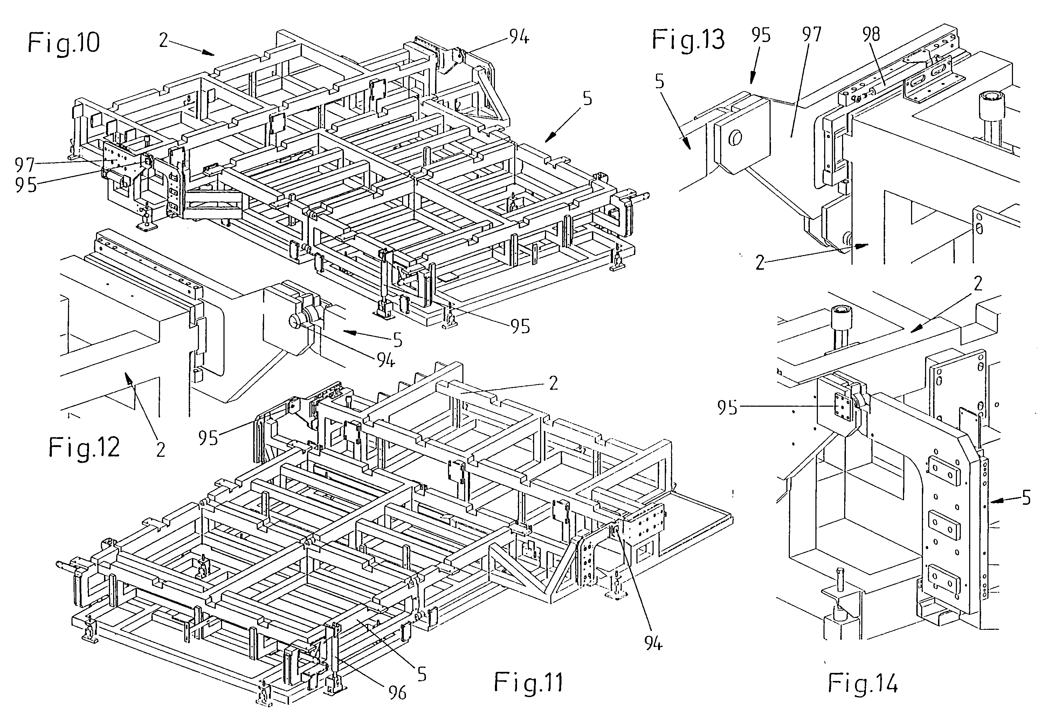

Um die bewegliche Auflage 5 zum Brechen verschwenken zu können (um eine horizontale Achse 4, die im Bereich des Spaltes 3 zwischen den beiden Auflagen 2, 5 liegt) und weiters, um eine senkrechte Achse (Drehpunkt 90), die außerhalb der Auflagen 2, 5 angeordnet ist, verdrehen zu können, ist das Maschinengestell beispielsweise wie in den Fig. 10 bis 14 (ohne die Platten, welche die eigentlichen Auflagen bilden) gezeigt, ausgebildet. Das der gestellfesten Auflage 2 zugekehrte Ende 6 der beweglichen Auflage 5 ist um zwei Lager 94, 95, deren Achsen sich in der Höhe der Auflagefläche (sh. Fig. 9.2. und 9.3.) befinden, verschwenkbar. Hierzu ist an dem Rahmen der beweglichen Auflage 5 an beiden Seiten ein Druckmittelzylinder 96 (entsprechend dem Zylinder 12) befestigt, mit welchem das vom Spalt 3 entfernte Ende der Auflage 5 zum Brechen von Verbundglas, nachdem dieses geritzt worden ist, heb- und senkbar (sh. Fig. 9.2 und 9.3) ist.

Zusätzlich ist eines der beiden Schwenklager, nämlich das Lager 95, in einer zur Auflagefläche parallelen Richtung (horizontal) verstellbar, wie dies in Fig. 13 und 14 gezeigt ist. Durch Betätigen des Druckmittelmotors (nicht gezeigt), der an einem Träger 97 des Lagers 95 angreift, dreht sich die bewegliche Auflage 5 um den vom Lager 94 gebildeten, in Fig. 9.4.1. gezeigten Drehpunkt 90, so daß sich der Bruch in den beiden Glasscheiben des Verbundglases, wie in Fig. 9.4.1. gezeigt, zu einem keilförmigen Spalt öffnet. Das Ausmaß des Drehens der beweglichen Auflage 5 wird durch eine z.B. elektronische Meßeinrichtung 98 erfaßt, die auch das Betätigen des Druckmittelzylinders zum Drehen der Auflage 5 steuert.

Zusammenfassend kann die Erfindung beispielsweise wie folgt dargestellt werden:

Eine Anordnung zum Teilen von Verbundglas besteht aus einer Vorrichtung zum Teilen von Verbundglas, und einem Glasschneidetisch 30 mit einer entlang seiner Auflage verfahrbaren Schneidbrücke 33, auf der ein Schneidkopf 38 zum Ritzen von Glastafeln verfahrbar ist. Die Vorrichtung zum Teilen von Verbundglas ist an einem der parallel zur Schneidbrücke 30 verlaufenden Ränder des Glasschneidetisches 30 angeordnet. An der Schneidbrücke 33 des Glasschneidetisches 30 ist ein Anschlag 40 zum Ausrichten von Verbundglas in der Vorrichtung zum Teilen von Verbundglas gegenüber den Ritzwerkzeugen dieser Vorrichtung vorgesehen. So wird Stellfläche eingespart und die Schneidbrücke 33 mit dem an ihr vorgesehenen Anschlag 40 kann zum Ausrichten von Verbundglas gegenüber der Einrichtung zum Ritzen der Glasscheiben von Verbundglas dienen. Auch kann die Vorrichtung zum Teilen von Verbundglas schmäler ausgeführt sein, bzw. überhaupt nur eine verschwenkbare Auflage 5 aufweisen, wenn die gestellfeste Auflage 2 mit der Auflagenfläche des Glasschneidetisches 30 einstückig ausgeführt ist.

## Patentansprüche

1. Anordnung zum Teilen von Verbundglas, bestehend aus einer Vorrichtung zum Teilen von Verbundglas, und einem Glasschneidetisch (30) mit einer entlang einer Auflage verfahrbaren Schneidbrücke (33), auf der ein Schneidkopf (38) zum Ritzen von Glasscheiben verfahrbar ist, dadurch gekennzeichnet, daß die Vorrichtung zum Teilen von Verbundglas an einem der parallel zur Schneidbrücke (33) verlaufenden Seiten des Glasschneidetisches (30) angeordnet ist, und daß an der Schneidbrücke (33) des Glasschneidetisches (30) ein Anschlag (40) für das zu teilende Verbundglas vorgesehen ist.

2. Anordnung nach Anspruch 1, dadurch gekennzeichnet, daß der Anschlag von wenigstens zwei nebeneinander angeordneten Anschlagteilen (40) gebildet ist.

3. Anordnung nach Anspruch 1 oder 2, dadurch gekennzeichnet, daß der Anschlag (40) aus einer der Auflagefläche des Glasschneidetisches (30) angenäherten Wirkstellung in eine von dieser entfernte Stellung und wieder zurück verstellbar ist.

4. Anordnung nach einem der Ansprüche 1 bis 3, dadurch gekennzeichnet, daß die Vorrichtung zum Teilen von Verbundglas zwei parallel zur Schneidbrücke (33) des Glasschneidetisches (30) ausgerichtete Reihen von Saugern (22) zum Festlegen von zu teilendem Verbundglas während des Ritzens und Brechens aufweist.

5. Anordnung nach einem der Ansprüche 1 bis 4, dadurch gekennzeichnet, daß die Vorrichtung zum Teilen von Verbundglas zum Festlegen von zu teilenden und zu brechenden Verbundglas Klemmeinrichtungen (20, 21) zum Festlegen von Verbundglas aufweist.

6. Anordnung nach einem der Ansprüche 1 bis 5, dadurch gekennzeichnet, daß die vom Glasschneidetisch (30) abgekehrte Auflage (5) der Vorrichtung zum Teilen von Verbundglas als Luftkissen- und/oder als Band- oder Rollenförderer für den Transport von Glasscheiben und/oder Verbundglas ausgebildet ist.

7. Anordnung nach einem der Ansprüche 1 bis 6, dadurch gekennzeichnet, daß die gestellfeste Auflage (2) der Vorrichtung zum Teilen von Verbundglas mit der Auflagefläche des Glasschneidetisches (30) einstückig ausgebildet ist.

8. Anordnung nach einem der Ansprüche 1 bis 7, dadurch gekennzeichnet, daß die vom Glasschneidetisch abgekehrtem Auflagen (5) um eine im Bereich eines Spaltes (3) zwischen den Auflagen (2) und (5) liegende horizontale Achse (4) verschwenkbar gelagert ist.

9. Anordnung nach einem der Ansprüche 1 bis 8, dadurch gekennzeichnet, daß die vom Glasschneidetisch abgekehrten Auflagen (5) der Vorrichtung zum Teilen von Verbundglas um eine zur gestellfesten Auflage (2) normale im Bereich des einen Endes des Spaltes (3) liegende Achse (90) verdrehbar ist.
